# EUROPÄISCHE PATENTANMELDUNG

(11) **EP 1 296 129 A2**
(43) Veröffentlichungstag der Anmeldung: **26.03.2003**
(21) Anmeldenummer: 02021229.6
(22) Anmeldetag: 18.09.2002
(51) Int. Cl.: G01N 13/02

(54) **Verfahren zum Messen der Oberflächenspannung einer Flüssigkeit und Messgerät zum Messen der Oberflächenspannung**

(30) Priorität: 21.09.2001 DE 10146629
(71) Anmelder: BSH Bosch und Siemens Hausgeräte GmbH, 81669 München (DE)
(72) Erfinder: Die Erfindernennung liegt noch nicht vor

(57) **Zusammenfassung**

Durch die Erfindung wird ein Messgefäß (8) mit einem Oberflächenspannungssensor mit einer Kapillare (15) geschaffen, die von oben nach unten von der durch das Messgefäß fließenden Flüssigkeit umströmt wird.

## Beschreibung

Die vorliegende Erfindung betrifft ein Verfahren zur dynamischen Messung der Oberflächenspannung einer durch ein Messgefäß strömenden Flüssigkeit mittels eines nach der Blasendruckmethode arbeitenden Oberflächenspannungssensors, wobei die Strömung der Flüssigkeit durch eine Prallplatte abgelenkt wird, bevor sie zu dem Oberflächenspannungssensor strömt.

Beim Bestimmen der Oberflächenspannung nach der Blasendruckmethode wird Luft durch eine Kapillare in die zu analysierende Flüssigkeit gedrückt. Der Innendruck der an der Kapillarspitze entstehenden Blasen wird gemessen. Unter Ausnutzung der Proportionalität bestimmter Druckwerte und der Oberflächenspannung der Flüssigkeit wird die Oberflächenspannung berechnet.

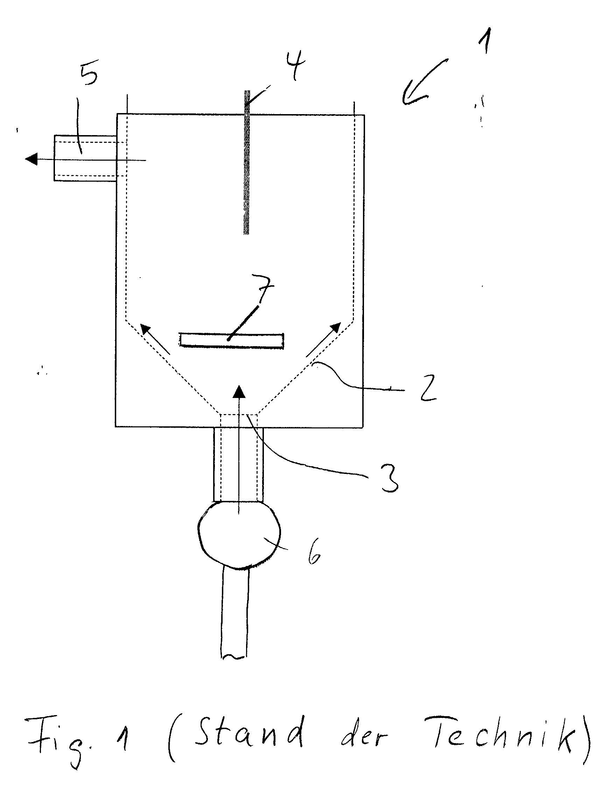

Ein aus dem Stand der Technik bekanntes Messgefäß 1 (Fig. 1) zur Aufnahme einer Flüssigkeit hat einen trichterförmigen Boden 2, in dessen tiefster Stelle sich eine Zu- und Ablauföffnung 3 befindet. Ein Ablagern von Partikeln und Flusen in dem Messgefäß 1 wird dadurch verhindert, dass diese wenigstens beim Entleeren des Messgefäßes entfernt werden. Die Eintauchtiefe einer Kapillare 4 zur Messung der Oberflächenspannung der Flüssigkeit nach der Blasendruckmethode wird über deren Füllstand definiert. Dieser stellt sich an einer Überlauföffnung 5 in dem Messgefäß ein.

Wenn eine Pumpe 6 eingeschaltet ist, fördert diese die Flüssigkeit in das Messgefäß 1. Die Flüssigkeit umströmt eine sich im rechten Winkel zu der Strömungsrichtung der einströmenden Flüssigkeit erstreckende Prallplatte 7. Wenn die Pumpe 6 ausgeschaltet ist, strömt die Flüssigkeit durch die Pumpe 6 zurück in einen Vorratsbehälter.

Aus der DE 41 12 417 A1 ist bereits eine Vorrichtung zur Messung der dynamischen Oberflächenspannung bekannt, bei dem an Gasstromquellen, die einen konstanten Gasstrom erzeugen, angeschlossene und in eine Flüssigkeit mit gleicher Tiefe eintauchende Kapillaren vorgesehen sind. Die Kapillaren sind mit einer Einrichtung zur Erfassung des Drucks oder der Druckänderungsfrequenz verbunden.

Es ist die Aufgabe der Erfindung, das Verfahren der eingangs genannten Art zu verbessern.

Erfindungsgemäß wird diese Aufgabe dadurch gelöst, dass die Flüssigkeit auf die ihr unter einem Winkel von weniger als 90° entgegengerichtete Prallplatte auftrifft, an ihr schräg zur Zulaufrichtung zurückströmt und dann in den oberen Bereich des Messgefäßes eingeleitet wird.

Es hat sich gemäß der Erfindung gezeigt, dass nur eine laminar um die Kapillare herumströmende Flüssigkeit eine genaue Messung der Oberflächenspannung der Flüssigkeit ermöglicht. Durch die Positionierung der Prallplatte unter einem Winkel von weniger als 90° zur Einströmrichtung der Flüssigkeit wird diese umgelenkt. Dadurch wird ein laminarer Flüssigkeitsstrom in dem Messgefäß auch dann noch erzeugt, wenn ein erhebliches Flüssigkeitsvolumen über eine der Zulauföffnung vorgelagerte Pumpe in das Messgefäß eingeführt wird.

Vorteilhafte Weiterbildungen der Erfindung ergeben sich aus den Unteransprüchen.

Besonders vorteilhaft ist ein Verfahren, gemäß dem die von der Prallplatte umgelenkte Flüssigkeit auf eine Auslaufschräge zuströmt und auf dieser in Richtung Überlauf fließt. Das Vorbeiströmen der Flüssigkeit an der Auslaufschräge trägt dazu bei, dass sich der Flüssigkeitsstrom vergleichmäßigt und keine Turbulenzen vorhanden sind.

Besonders geeignet ist ein Verfahren, bei dem die Flüssigkeit von oben nach unten an dem Oberflächenspannungssensor bis zu der Stelle des Oberflächenspannungssensors vorbeiströmt, an der die Luftblasen aus diesem heraustreten. Dadurch wird erreicht, dass Schmutzpartikel, die sich an der Kapillare im Bereich der Austrittsöffnung der Kapillare, an der die Gasblasen herausströmen, sofort von der Flüssigkeit mitgenommen werden, ohne sich abzulagern. Die Anordnung hat damit eine selbstreinigende Wirkung.

Von Vorteil ist es, wenn die Flüssigkeit von unten in das Messgefäß strömt. Dann kann im oberen Bereich des Messgefäßes die Kapillare angeordnet werden, wo eine geringere Fließgeschwindigkeit der Flüssigkeit herrscht als im Bereich des Zulaufs der Flüssigkeit.

Die Erfindung bezieht sich ebenfalls auf ein Messgefäß zur dynamischen Messung der Oberflächenspannung einer über eine Zulauföffnung in das Messgefäß einströmenden und über eine Auslauföffnung aus dem Messgefäß herausfließenden Flüssigkeit mit einem Oberflächenspannungssensor und einer Prallplatte zur Ablenkung der Strömung der Flüssigkeit.

Es ist die Aufgabe der Erfindung, das bekannte Messgefäß so zu verbessern, dass stets eine einfache Messung der Oberflächenspannung der Flüssigkeit gewährleistet ist und das Anlagern von Verschmutzungen an der Kapillarspitze vermieden wird.

Erfindungsgemäß wird diese Aufgabe dadurch gelöst, dass die Prallplatte an einer ersten Seite unter einem Winkel von weniger als 90° der Zulauföffnung entgegen gerichtet ist und dass die Prallplatte an den anderen Seiten eine geschlossene Verbindung mit der Zulauföffnung aufweist.

Durch diese Maßnahme wird erreicht, dass die Flüssigkeit auf einer Seite der Prallplatte zunächst schräg zur Zuflussrichtung zurückströmt und erst dann an der Prallplatte vorbeistreichen kann, während die Prallplatte auf den anderen Seiten nicht umflossen werden kann. Hierzu ist die Prallplatte durch eine Wandung, die beispielsweise die Wandung des Messgefäßes sein kann, mit der Zulauföffnung verbunden.

Vorteilhafte Weiterbildungen der Erfindung ergeben sich aus den Unteransprüchen.

Vorteilhaft ist die Zulauföffnung für die Flüssigkeit an der Unterseite des Messgefäßes angeordnet.

Um ein gleichmäßiges Herausfließen der Flüssigkeit aus dem Messgefäß zu gewährleisten, ist der Auslauföffnung eine Überlaufkante vorgeordnet. Schwankungen des Füllstandes der Flüssigkeit in dem Messgefäß werden damit verhindert. Die Flüssigkeitsströmung verteilt sich auf die gesamte Breite des Messgefäßes, wenn die Überlaufkante die ganze Breite einer Wand des Messgefäßes einnimmt.

Vorzugsweise ist eine Auslaufschräge vorhanden, die eine die Überlaufkante bildende obere Kante aufweist.

Mit Vorteil ist die Auslaufschräge so angeordnet, dass sie mit einer gedachten Verlängerungslinie der Prallplatte einen spitzen oder einen stumpfen Winkel bildet. Die durch die Zulauföffnung in das Messgefäß einströmende Flüssigkeit wird somit durch die Prallplatte umgelenkt und strömt gegen die Auslaufschräge, an der sie erneut umgelenkt wird. Erst dann strömt sie in Richtung zum Auslauf weiter. Ein Teil der Flüssigkeit strömt zur Kapillare, an der sie von oben nach unten zu dem Bereich der Austrittsöffnung der Gasblasen vorbeifließt und dadurch sämtliche Schmutzpartikel, die sich an der Kapillare, insbesondere im Bereich der Austrittsöffnung, abgelagert haben, mitreißt. Das Hängen bleiben von Verschmutzungen, beispielsweise von Flusen aus einem Waschprozess, wird minimiert.

Um sicherzustellen, dass im Bereich des Ausflusses keine durch die zufließende Flüssigkeit mitgeführten Verunreinigungen einen Pfropf bilden und um ein Überlaufen des Messgefäßes zu vermeiden, hat die Auslauföffnung einen größeren Durchmesser als die Zulauföffnung.

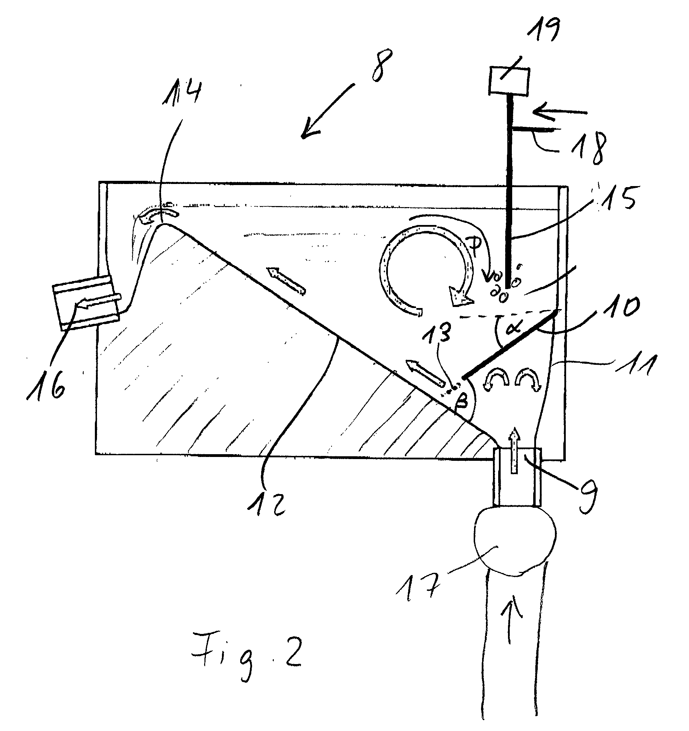

Nachfolgend wird ein Ausführungsbeispiel der Erfindung anhand der Zeichnung näher erläutert. Figur 2 zeigt ein Messgefäß.

In ein Messgefäß 8 strömt über eine Zulauföffnung 9 eine Flüssigkeit. Die Flüssigkeit trifft auf eine Prallplatte 10, die der einströmenden Flüssigkeit um einen Winkel α entgegengerichtet ist, der kleiner als 90° ist. Die Prallplatte 10 ist an einer Seite fest mit einer Wandung 11 verbunden, die sich ihrerseits an die Zulauföffnung 9 anschließt und gewährleistet, dass die Flüssigkeit nur an der anderen Seite der Prallplatte 10 an dieser vorbeifließen kann.

Die Flüssigkeit strömt dann an einer Auslaufschräge 12 entlang, deren untere Begrenzung durch die Zulauföffnung 9 gebildet wird. Die Auslaufschräge 12 bildet mit einer gedachte Linie 13 in der Verlängerung der Prallplatte 10 einen spitzen, rechten oder stumpfen Winkel β. Die Auslaufschräge 12 ist entweder als schiefe Ebene ausgebildet oder sie hat einen kurvenförmigen Verlauf. Die Flüssigkeit strömt zwischen der Prallplatte 10 und der Auslaufschräge 12 hindurch.

Aufgrund der Anordnung der Prallplatte 10 fließt ein Teil der Flüssigkeit zur Oberfläche des sich in dem Messgefäß mittels einer Überlaufkante 14 am oberen Rand der Auslaufschräge 12 bildenden Flüssigkeitspegels und fließt anschließend im wesentlichen senkrecht von oben nach unten, wie durch Pfeile P angedeutet, an einer zu einem Oberflächenspannungssensor zugehörigen Kapillare 15 vorbei, an deren unterem Ende Gasblasen austreten. Die Flüssigkeit reißt Verschmutzungen am unteren Ende der Kapillare 15 mit und fließt anschließend über die Überlaufkante 14, die sich vorzugsweise über die ganze Breite des Messgefäßes 8 erstreckt, über eine Auslauföffnung 16 ab.

Die Flüssigkeit wird über eine Pumpe 17 zu der Zulauföffnung 9 gefördert und kann, wenn diese abgeschaltet ist, auch über die Zulauföffnung abfließen, um das Messgefäß 8 zu entleeren.

Durch die Kapillare 15 strömt ein Gasstrom, beispielsweise ein Luftstrom, der über eine Zuleitung 18 zugeführt wird. Eine Messeinheit 19 bestimmt den Gasdruck, um daraus die Oberflächenspannung zu ermitteln.

Es versteht sich, dass anstelle einer Kapillare 15 auch andere Vorrichtungen zur Messung der Oberflächenspannung erfindungsgemäß in dem Messgefäß 8 eingesetzt werden können. Auch können, wie aus der DE 41 12 417 A1 bekannt ist, zwei Kapillaren eingesetzt werden, um die Oberflächenspannung zu bestimmen. Zusätzlich zu dem Oberflächenspannungssensor lassen sich weitere Sensoren in dem Messgefäß anordnen, z. B. um die Temperatur der Flüssigkeit, die Leitfähigkeit oder den pH-Wert zu bestimmen.

Durch die Erfindung wird ein Messgefäß 8 mit einem Oberflächenspannungssensor mit einer Kapillare 15 geschaffen, die von oben nach unten von der durch das Messgefäß fließenden Flüssigkeit umströmt wird. Die Flüssigkeit reißt Verschmutzungen von der Kapillare 15 mit. Die Kapillare 15 ragt im wesentlichen senkrecht in die Flüssigkeit herab, sie kann jedoch auch schräg in die Flüssigkeit eintauchen.

## Patentansprüche

1. Verfahren zur dynamischen Messung der Oberflächenspannung einer durch ein Messgefäß (8) strömenden Flüssigkeit mittels eines nach der Blasendruckmethode arbeitenden Oberflächenspannungssensors (15), wobei die Strömung der Flüssigkeit durch eine Prallplatte (10) abgelenkt wird, bevor sie zu dem Oberflächenspannungssensor (15) strömt, **dadurch gekennzeichnet, dass** die Flüssigkeit auf die ihr unter einem Winkel (α) von weniger als 90° entgegengerichtete Prallplatte (10) auftrifft, an ihr schräg zur Zulaufrichtung zurückströmt und dann in den oberen Bereich des Messgefäßes (8) eingeleitet wird.

2. Verfahren nach Anspruch 1, **dadurch gekennzeichnet, dass** die von der Prallplatte (10) umgelenkte Flüssigkeit auf eine Auslaufschräge (12) zuströmt, wobei ein Teil der Flüssigkeit von dieser zu einem Überlauf und ein Teil in Richtung zu dem Oberflächenspannungssensor (15) umgelenkt wird.

3. Verfahren nach Anspruch 1 oder 2, **dadurch gekennzeichnet, dass** die Flüssigkeit an einer Stelle des Oberflächenspannungssensors (15) vorbeiströmt, an der die Luftblasen aus diesem heraustreten.

4. Verfahren nach Anspruch 1, **dadurch gekennzeichnet, dass** die Flüssigkeit von unten in das Messgefäß (8) strömt.

5. Verfahren nach Anspruch 1 oder 2, **dadurch gekennzeichnet, dass** die Flüssigkeit über den Überlauf (14) durch die Auslauföffnung (16) aus dem Messgefäß (8) herausfließt.

6. Messgefäß zur dynamischen Messung der Oberflächenspannung einer über eine Zulauföffnung (9) in das Messgefäß (8) einströmenden und über eine Auslauföffnung (16) aus dem Messgefäß (8) herausfließenden Flüssigkeit mit einem Oberflächenspannungssensor (15) und einer Prallplatte (10) zur Ablenkung der Strömung der Flüssigkeit, **dadurch gekennzeichnet, dass** die Prallplatte (10) an einer ersten Seite unter einem Winkel (α) von weniger als 90° der Zulauföffnung (9) entgegen gerichtet ist und dass die Prallplatte an den anderen Seiten eine geschlossene Verbindung mit der Zulauföffnung (9) aufweist.

7. Messgefäß nach Anspruch 6, **dadurch gekennzeichnet, dass** die Zulauföffnung (9) an der Unterseite des Messgefäßes (8) angeordnet ist.

8. Messgefäß nach Anspruch 6 oder 7, **dadurch gekennzeichnet, dass** der Auslauföffnung (16) eine Überlaufkante (14) vorgeordnet ist.

9. Messgefäß nach Anspruch 8, **dadurch gekennzeichnet, dass** die Überlaufkante (14) die ganze Breite einer Wand des Messgefäßes (8) einnimmt.

10. Messgefäß nach Anspruch 8 oder 9, **dadurch gekennzeichnet, dass** die Auslauföffnung (16) einen größeren Durchmesser als die Zulauföffnung (9) hat.

11. Messgefäß nach einem der Ansprüche 8 bis 10, **dadurch gekennzeichnet, dass** eine Auslaufschräge (12) vorhanden ist, die eine die Überlaufkante (14) bildende obere Kante aufweist.

12. Messgefäß nach Anspruch 11, **dadurch gekennzeichnet, dass** die Auslaufschräge (12) mit einer gedachten Verlängerungslinie (13) der Prallplatte (10) einen spitzen, rechten oder stumpfen Winkel bildet.
